(19) Europäisches Patentamt
European Patent Office
Office européen des brevets

(11) EP 0 570 017 B1

(12) EUROPEAN PATENT SPECIFICATION

(45) Date of publication and mention
of the grant of the patent:
**02.05.1997   Bulletin 1997/18**

(51) Int Cl.⁶: **G03G 15/00**

(21) Application number: 93108086.5

(22) Date of filing: **01.10.1990**

(54) **Sheet feeding apparatus**

Blattzuführgerät

Appareil d'alimentation en feuilles

(84) Designated Contracting States:
**DE FR GB IT**

(30) Priority: **02.10.1989   JP 255190/89**
**19.10.1989   JP 270424/89**
**04.12.1989   JP 313540/89**
**23.05.1990   JP 134678/90**

(43) Date of publication of application:
**18.11.1993   Bulletin 1993/46**

(62) Application number of earlier application in
accordance with Art. 76 EPC: **90118825.0**

(73) Proprietor: **CANON KABUSHIKI KAISHA**
**Tokyo (JP)**

(72) Inventor: **Kitahara, Makoto,**
**c/o Canon Kabushiki Kaisha**
**Ohta-ku, Tokyo 146 (JP)**

(74) Representative: **Tiedtke, Harro, Dipl.-Ing. et al**
**Patentanwaltsbüro**
**Tiedtke-Bühling-Kinne & Partner**
**Bavariaring 4**
**80336 München (DE)**

(56) References cited:
**JP-A-62 277 154          US-A- 4 708 469**
**US-A- 4 727 401**

• **PATENT ABSTRACTS OF JAPAN, vol. 13, no. 91**
**(P-837) 3 March 1989; & JP-A-63 273 853**
• **PATENT ABSTRACTS OF JAPAN, vol. 13, no.**
**310 (M-850) 14 July 1989; & JP-A-01 098 534**

## Description

The present invention relates to a sheet feeding apparatus, and more particularly, it relates to a sheet feeding apparatus such as an original feeding apparatus used with a copying machine, reader and the like, which can simultaneously rest a plurality of sheets on a predetermined processing device.

In the past, an original feeding apparatus has been known as a typical example of such sheet feeding apparatuses, which will be now described as an example.

In the copying operation effected by an image forming system such as a copying machine and the like incorporating an original feeding apparatus, wherein originals are automatically and continuously fed to a platen, it is known that two images of two originals are printed side by side on one surface of a single recording medium (copying sheet).

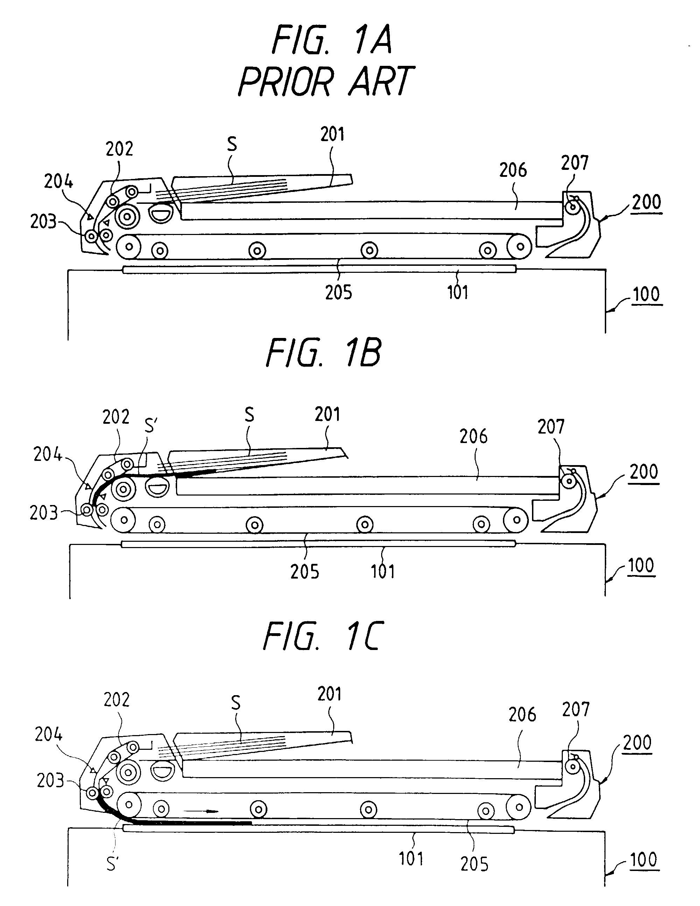

Fig. 1A shows an example of the image forming system performing such copying operation. A similar system is known from JP-A-63 277 154.

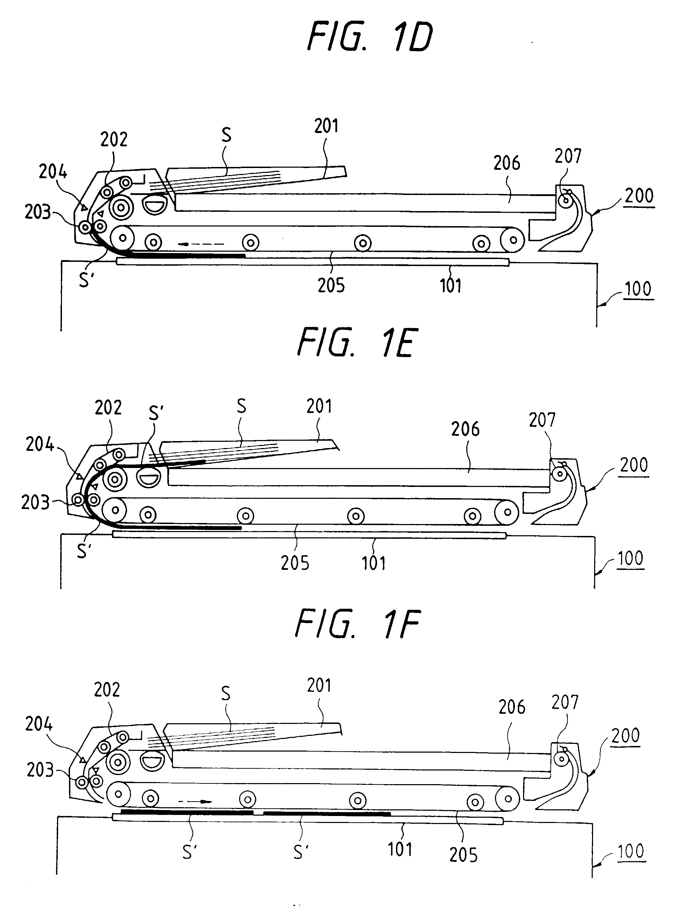

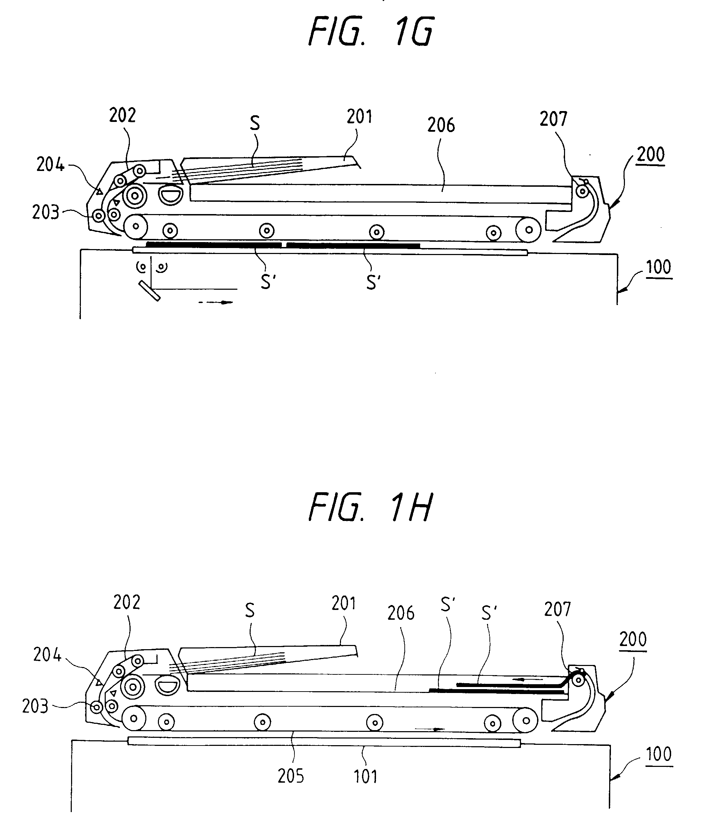

In Fig. 1, the image forming system comprises a frame or body 100 and a platen 101 acting as an image reading portion. An original feeding apparatus 200 is disposed above the platen. The original feeding apparatus 200 comprises a stacking tray 201 on which a plurality of originals S' are stacked (original stack S), a separating portion 202 for separating the original S' from the original stack S on the stacking tray 201 one by one, feed rollers 203 for feeding the original S' separated by the separating portion 202 toward the platen 101, a sensor 204 disposed between the feed rollers 203 and the separating portion 202 and adapted to detect the original S', a whole-surface belt 205 for setting the original S' fed from the feed rollers 203 on the platen 101, an ejector roller 207 for ejecting the original S' from the platen 101 onto a sheet discharge tray or ejector tray 206.

In the above image forming system, the original stack S is set on the stacking tray with the images thereof turned upside (refer to Fig. 1A). When a copy start signal is applied to the apparatus, the separating portion 202 is rotated to separate a lowermost original S' from the original stack S and to feed it until a leading end of the original abuts against the feed rollers 203 (refer to Fig. 1B). Then, the feed rollers 203 and the whole-surface belt 205 are rotated normally so that the original S' is fed toward the platen 101; the rollers 203 and the belt 205 are stopped when a trailing end of the original S' leaves the feed rollers 203 (refer to Fig. 1C).

Then, the whole-surface belt 205 is rotated slightly reversely until the trailing end of the original S' abuts against the feed rollers 203, and then, the belt is stopped (refer to Fig. 1D). Thereafter, the separating portion 202 is rotated to separate a next or second original S' and to feed it until a leading end of the second original abuts against the feed rollers 203 (refer to Fig. 1E). Then, the feed rollers 203 and the whole-surface belt 205 are again rotated normally so that the second original S' is fed toward the platen 101; the whole-surface belt 205 is stopped when the second original S' reaches a predetermined position on the platen 101 (refer to Fig. 1F).

In this way, two originals S' are rested or arranged side by side on the platen 101. Thereafter, when images of these originals S' are read (refer to Fig. 1G), the images of two originals S' are copied or printed on one surface of a single copying sheet. After the reading of the images has been finished, the whole-surface belt 205 and the ejector roller 207 are rotated normally to eject or discharge the originals S' on the platen 101 onto the discharge tray 206 (refer to Fig. 1H).

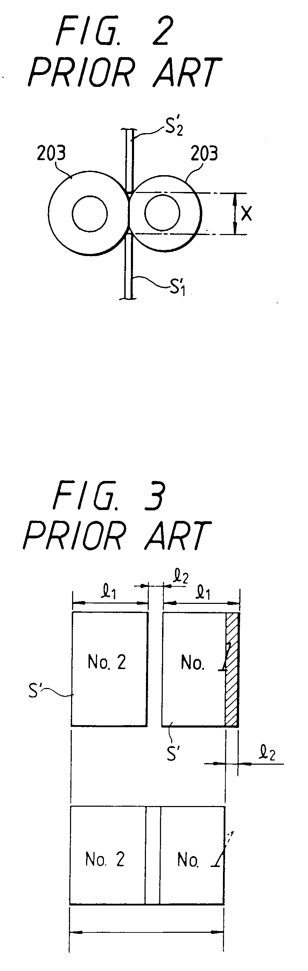

However, as apparent from Fig. 2 showing a nip between the feed rollers 203 in an enlarged scale, it is difficult that the leading end of the second original S' is abutted against the trailing end of the lowermost or first original S', and thus, a clearance corresponding to a width X of the nip will be created between these ends of the two originals. Consequently, a clearance corresponding to the width X is also created between two originals S' rested on the platen 101, which leads in the drawback in the copying operation.

For example, as shown in Fig. 3, assuming that the size of the original S' is $\ell_1$ and the clearance between two originals is $\ell_2$, when the images of these originals are copied on a copying sheet having a size larger than the original by two times or twice, since the first original S' is shifted by a distance $\ell_2$ from an image reading area, an image portion included in a hatched area (having a width $\ell_2$) of the first original S' will disappear from the copied image on the copying sheet.

The present invention aims to eliminate the above-mentioned conventional drawback, and an object of the present invention is to provide an image forming system and an original feeding apparatus used with such system, which can read images of a plurality of originals arranged side by side and can print the read images on a single recording medium without the lack or disappearance of portion of the images.

This object is achieved by an apparatus having the features mentioned in claim 1.

The invention is further developed by the features mentioned in the dependent claims.

Figs. 1A to 1H are elevational views of a conventional original feeding apparatus, for explaining the operation thereof;

Fig. 2 is an enlarged view showing a nip between feed rollers of the conventional original feeding apparatus;

Fig. 3 is a plan view of images printed on a recording medium by the conventional original feeding apparatus;

Fig. 4 is an elevational view of an original feeding apparatus and an image forming system;

Fig. 5 is a schematic sectional view of an original feeding apparatus of an image forming system, according to an embodiment of the present invention;

Figs. 6A to 6F are elevational views of the original feeding apparatus of Fig. 5, for explaining the operation thereof;

Fig. 7 is a block diagram of a control system of the image forming system;

Fig. 8A and 8B are a flow chart showing the controlling contents of the control system;

Fig. 9 is a plan view of images printed on a recording medium by the original feeding apparatus of Fig. 5; and

Fig. 10A is a development view showing the relationship between a sensor 20, feed rollers 16 and a whole-surface belt 17, Figs. 10B to 10D are explanatory views for explaining the feeding condition of originals.

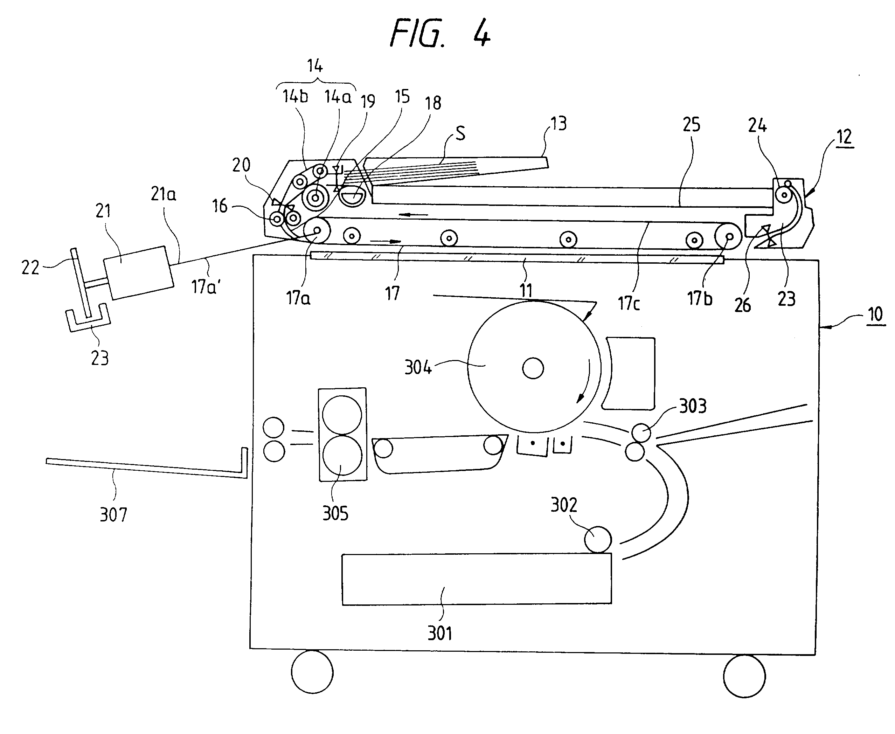

In Figur 4, the copying machine comprises a frame or body 10 and a platen 11 acting as an image reading portion. An original feeding apparatus 12 acting as an original feeding means is disposed above the platen. The original feeding apparatus 12 comprises a stacking tray 13 on which a plurality of originals S' are stacked (original stack S), a separating portion 14 (conveying roller 14a and separating belt 14b) for separating the original S' from the original stack S on the stacking tray 13 one by one, a substantially U-shaped guide 15 for guiding the separated original S' to the platen 11, feed rollers 16 arranged at an appropriate position along the guide 15, for feeding the original S' toward the platen 11, and a whole-surface belt 17 for setting the original S' at a predetermined position on the platen 101.

At a downstream side of the stacking tray 13, there are arranged a semi-circular sheet feed or supply roller 18 and a sensor 19 for detecting a leading end of the original S'. Further, the conveying roller 14a of the separating portion 14 is rotated in an anti-clockwise direction (Fig. 4) and the separating belt 14b is disposed adjacent to the conveying roller 14a and is also rotated in an anti-clockwise direction. At an upstream side of the feed rollers 16 along the guide 15, there is arranged a sensor 20 for detecting the passage of the original S'.

Further, the whole-surface belt 17 is constituted by a driving roller 17a disposed at one end (left end in Fig. 4) of the platen 11, a driven roller 17b disposed at the other end (right end in Fig. 4) of the platen 11, a conveying belt 17c extending between and engaged by these rollers 17a, 17b. One end of a driving motor 21 is connected to a driving shaft 17a' of the driving roller 17a so that the conveying belt 17c can be rotated in a direction shown by solid arrows in Fig. 4 by means of the driving motor 21.

Incidentally, a clock plate 22 is connected to the other end of the driving shaft 21a and a photo-interrupter 23 is disposed near the clock plate 22. The photo-interrupter 23 controls a moving amount of the conveying belt 17c by counting the number of slits formed in the clock plate 22.

Further, at the other end of the platen 11, there are arranged a substantially U-shaped guide 23 and an ejector roller or sheet discharge roller 24, so that the original S' on the platen 11 can be ejected or discharged onto a sheet discharge tray 25 disposed above the conveying belt 17c. At an appropriate position along the guide 23, there is arranged a sensor 26 for detecting the original S'.

Next, an operation of the copying machine with the original feeding apparatus will be explained.

Now, an example that two originals S' are simultaneously rested on the platen 11 will be described.

(1) The originals are stacked on the stacking tray 13 with images thereon turned upside.

(2) By depressing a copy start button (not shown), the supply roller 18 and the separating portion 14 are rotated to separate the lowermost original from the original stack and to feed it toward the feed rollers 16.

(3) When a predetermined time is elapsed after a leading end of the original has passed through the sensor 20, the separating portion 14 and the roller 18 are stopped. In this way, the lowermost or first original is stopped in such a manner that the leading end of the original is abutted against the feed rollers 16 and a predetermined loop is formed in the original to correct the skew-feed of the original.

(4) When the separating portion 14 and the roller 18 are stopped, the feed rollers 16 and the whole-surface belt 17 are rotated normally in the direction shown by the arrow to convey the original toward the platen 11.

(5) When a trailing end of the original has passed through the sensor 20 and reaches the nip between the feed rollers 16, the rollers 16 and the belt 17 are stopped . Now, the feeding amount of the original is controlled by counting the number of the slits of the clock plate 21 by means of the photo-interrupter 22 to seek the original advancing amount from when the leading end of the original has passed through the sensor 20. Incidentally, on the basis of the counted value, when it is judged that the trailing end of the original reaches near the stopping position, the advancing speed of the original is decreased (by reducing the supply of the voltage to the driving motor), thus facilitating the positioning of the original.

(6) When the trailing end of the first original is pinched by the nip between the feed rollers , the roller 18 and the separating portion 14 are rotated again to feed a next or second original in the same manner as the above step (3). As a result, the second original is stopped in such a manner that the leading end of the original is abutted against the feed rollers 16 and a predetermined loop is formed in the original. In this case, since the trailing end of the first original is pinched between the nip, a distance or clearance Y between the trailing end of the first original and the leading end of the second original will be smaller than the distance X described with respect to Fig. 3. Further, by setting the stopping position of the trailing end of the first original to a further upstream of the nip, the distance Y can be further reduced or eliminated. Since the second original tends to invade into the nip due to the reaction force of the loop, if the trailing end of the first original is protruded from the nip toward the upstream side thereof, the second original is guided by a wedged cavity defined by the peripheral surfaces of the feed rollers 16 to abut against the trailing end of the first original (Y = 0). When the rollers 16 are rotated, the second original enters into the nip by the reaction force of the loop.

(7) When the separating portion 14 and the roller 18 are stopped, the rollers 16 and the belt 17 are rotated normally again to feed two (first and second) originals toward the platen 11.

(8) When the trailing end of the second original has passed through the sensor 20 and reaches a predetermined position on the platen 11, the rollers 16 and the belt 17 are stopped. Also, in this case, the feeding amount of the originals is controlled by counting the number of slits of the clock plate 21 by means of the photo-interrupter 22. In this way, the two originals are rested on the platen 11 with a minute distance therebetween.

(9) After the originals has been rested on the platen, an optical system (not shown) provided in the copying machine 10 starts a scanning operation. The scanning operation is continuously performed through the first and second originals. In synchronous with this scanning (reading) operation, a single sheet (recording medium) having a size equal to a total length of the first and second originals is fed from a cassette 301 by means of a supply roller 302.

The sheet is stopped by regist rollers 303 and is fed in synchronous with a position of developed images formed on a photosensitive drum 304 (on which images of the first and second originals read are projected). As a result, the images of two originals are printed on the single copy sheet. By repeating such operations, a desired number of copies can be obtained. Incidentally, in Fig. 4, the reference numeral 305 denotes a fixing device, and 307 denotes a sheet discharge tray.

(10) After the reading operation, the belt 17 and the roller 24 are rotated to eject the two originals on the platen onto the tray 25.

The above cycles are repeated until there is no original on the tray 13. In this way, it is possible to rest a plurality of originals on the predetermined position with a minimized distance therebetween by stopping the trailing end of the preceding original into the nip and by abutting the leading end of the next original against the trailing end of the preceding original.

In the above steps (4) and (5), while the feeding speed of the first original from the position where the loop is formed in the original to the position where the trailing end of the original is pinched between the nip was the same as the normal original feeding speed, such speed may be delayed to enhance the accuracy for positioning the trailing end of the original in the nip. Further, the feeding speed of the first original may be delayed after the trailing end of the first original has just passed through the sensor 20, so that the accuracy for positioning the trailing end of the original in the nip can be improved.

In the above arrangement, while the original feeding apparatus 12 included the separate or discrete stacking tray 13 and discharge tray 25, the apparatus may be designed so that the read original S' is returned to the same stacking tray 13. Further, while an example that two originals S' are rested on the platen 11 and printed on a single recording medium was explained, three, four or more originals S' may be rested on the platen 11 and copied on a single recording medium.

Further, while an example that images of a plurality of originals S' are printed on one surface (front surface) of a single recording sheet (single-side printing) was explained, images of a plurality of originals S' may be printed on the other surface (back surface) of the single recording medium by turning over the recording medium in the copying machine. In addition, while the above arrangement was applied to the copying machine, it may, of course, be applied to a laser printer, image reader (reading apparatus) and the like.

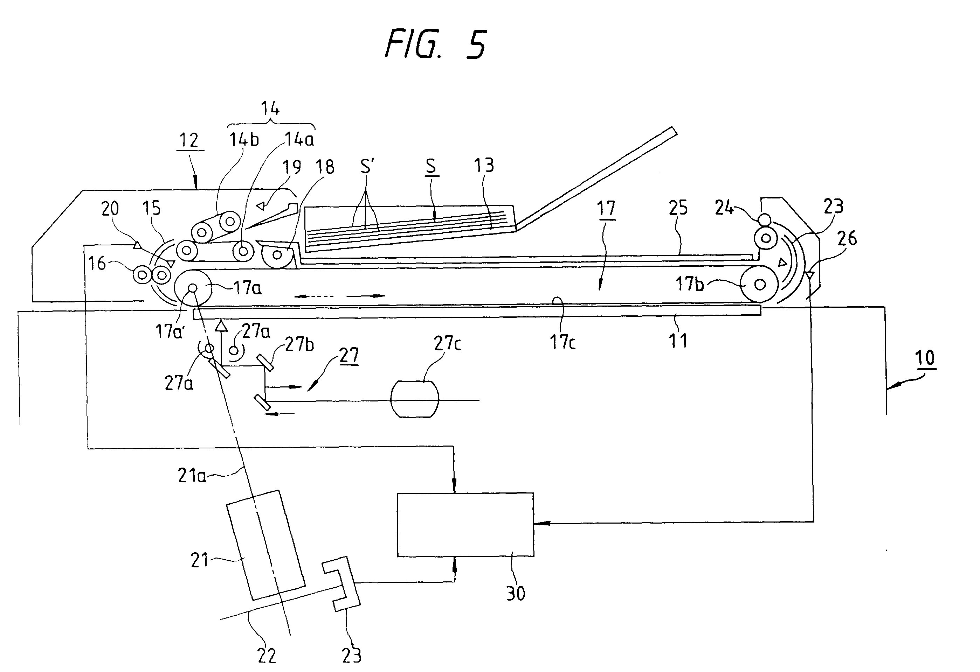

Next, an embodiment of the invention wherein the minute clearance between the originals is further minimized or eliminated will be explained with reference to Figs. 5 to 10.

Since the construction of the copying machine according to this embodiment is the same as that shown in Figs. 4, the detailed explanation thereof will be omitted.

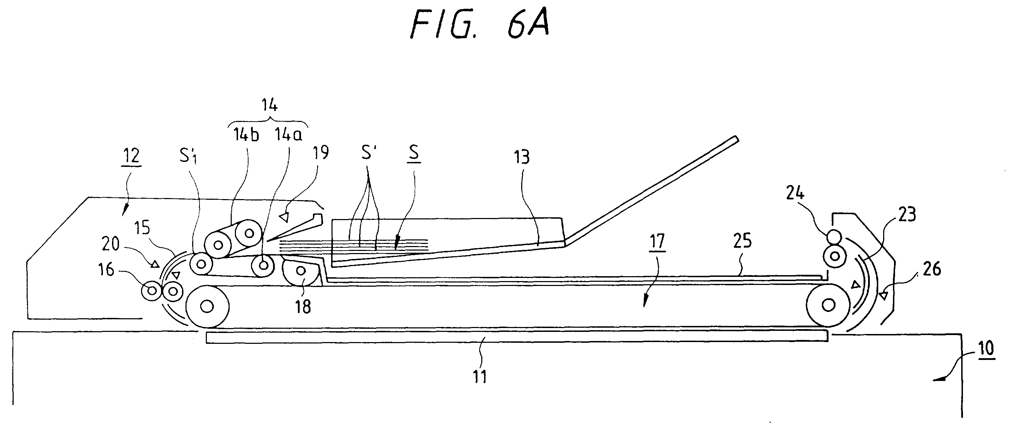

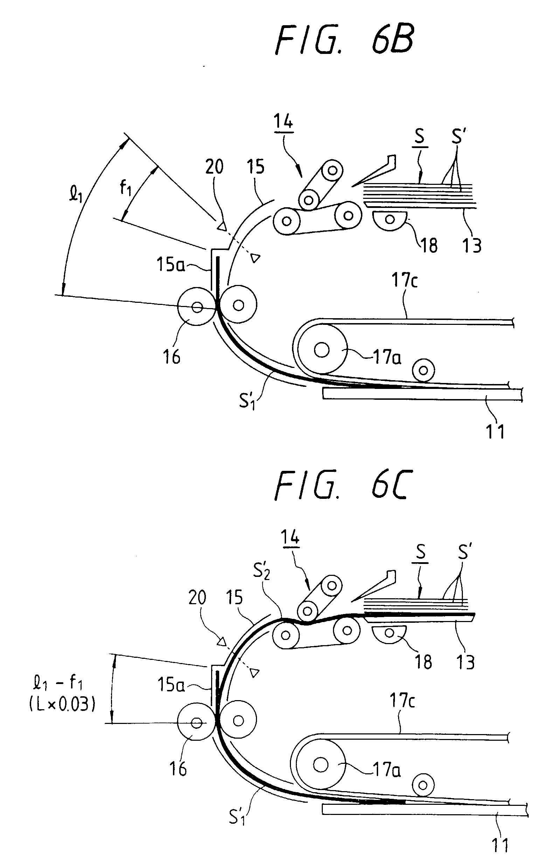

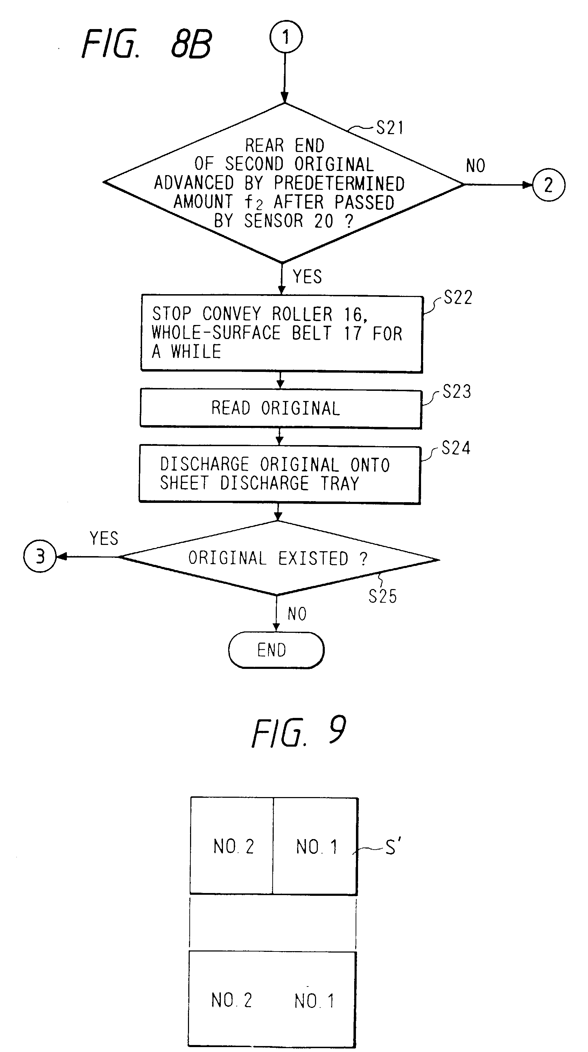

In the vicinity of the feed rollers 16 disposed along the guide 15, there is provided a waiting portion 15a swelling outwardly (refer to Figs. 6B, 6C). The waiting portion 15a so acts that, when a trailing end of the first original $S_1'$ is overlapped with a leading end of the second original $S_2'$, the trailing end portion of the first original $S_1'$ is temporarily received in the waiting portion and the leading end of the second original $S_2'$ can be fed until it abuts against the feed rollers 16 without being obstructed by the trailing end of the first original $S_1'$. Further, a sensor 20 for detecting the passage of the original S' is arranged at an appropriate position along the guide 15.

The moving speed of the whole-surface belt 17c is selected to be slightly faster than the rotating speed of the feed rollers 16. In general, the former is faster than the latter by about 3%. The reason for adopting this speed difference is that, if the speed of the feed rollers 16 is faster than the whole-surface belt 17c, the original S' is slacked between the feed rollers 16 and the whole-surface belt 17c, thus affecting a bad influence upon the feeding of the original.

The controlling portion 30 to which the sensors 20, 26 and the photo-interrupter 23 are connected receives signals from these elements 20, 26, 23 and controls the original feeding apparatus 12 in such a manner that the trailing end of the first original $S_1'$ and the leading end of the second original $S_2'$ are once overlapped with each other in the waiting portion 15a and these two originals are fed to the platen 11 meanwhile the overlapped amount is reduced to substantially zero.

Further, the controlling portion 30 calculates the overlapped amount (between the originals) on the basis of the length of the original S' (in the feeding direction) detected by the sensor 20 and the photo-interrupter 23, and controls the original feeding apparatus 12 as mentioned above, on the basis of this overlapped amount. Further, to the controlling portion 30, a mode switch 31 for setting a copy mode and a copy sheet size switch 32 for setting a size of the copy sheet are connected; these switches are arranged on the operation panel (not shown) of the copying machine 10.

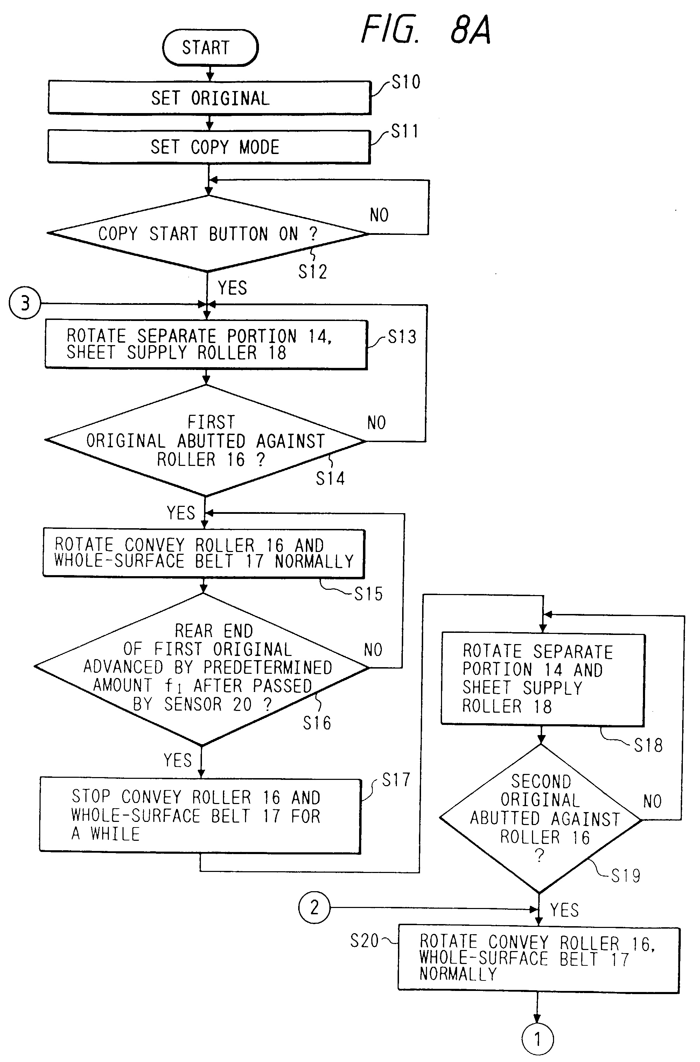

Next, an operation of this copying machine will be explained with reference to Figs. 6A to 6F and 8.

First of all, in a step S10, an original stack S is set on the stacking tray 13 with imaged surfaces thereof turned upside (Fig. 6A). Then, in a step S11, the one scan mode (wherein images of a plurality of originals S' are printed on one surface of a copy sheet) is set by the mode switch 31, and the size of the copy sheet is set by the copy sheet size switch 32. Further, the magnification is also set. In this embodiment, it is assumed that the size of the original is A4, the size of the copy sheet is A3 and the magnification is 100%.

Then, when the copy start button (not shown) is depressed, in a step S12, it is judged whether the copy start button is turned ON or OFF; if it is turned ON, the sequence goes to a step S13, where the separating portion 14 and the supply roller 18 are rotated to separate a first original $S_1'$ from a bottom of the original stack S and to feed it until the leading end of this original abuts against the feed rollers 16 to form a predetermined loop therein (Fig. 6A).

In a step S14, it is judged whether the leading end of the first original $S_1'$ is abutted against the feed rollers 16 or not; if abutted, the sequence goes to a step S15 and at the same time the separating portion 14 and the supply roller 18 are stopped. In the step S15, the feed rollers 16 and the whole-surface belt 17 are rotated normally to feed the first original $S_1'$ toward the platen 11. Then, in a step S16, the size of the first original $S_1'$ being passed through the sensor 20 is detected by the photo-interrupter 23 and the sensor 20, and the overlapped amount is calculated on the basis of the detected data. And, it is judged whether the trailing end of the first original $S_1'$ is advanced by a predetermined amount $f_1$ after it has passed through the sensor 20.

If the trailing end of the first original $S_1'$ is advanced by the predetermined amount $f_1$ (YES), the sequence goes to a step S17, where the feed rollers 16 and the whole-surface belt 17 are temporarily stopped (Fig. 6B). Now, as shown in Fig. 6B, when a distance between the sensor 20 and the nip of the feed rollers 16 is $\ell_1$, the trailing end of the first original $S_1'$ is stopped to protrude from the nip of the feed rollers 16 toward an upstream side by an amount $(\ell_1 - f_1)$.

Then, in a step S18, the separating portion 14 and the supply roller 18 are rotated to separate the second original $S_2'$, and in a step S19, the leading end of the second original $S_2'$ is abutted against the feed rollers 16 to form a predetermined loop therein (Fig. 6C). In the step S19 if the leading end of the second original $S_2'$ is abutted against the feed rollers 16, the sequence goes to a step S20 and at the same time the separating portion 14 and the supply roller 18 are stopped.

When the leading end of the second original $S_2'$ is being fed to the feed rollers 16, since the protruding trailing end of the first original $S_1'$ is received in the outwardly swelling waiting portion 15a due to the elastic feature of the original itself and does not block the passage in the guide 15, leading end of the second original $S_2'$ can move in the guide 15 and abut against the feed rollers 16 without any obstruction.

In this way, the trailing end portion of the first original $S_1'$ and the leading end portion of the second original $S_2$ are overlapped with each other by the predetermined amount $(\ell_2 - f_1)$. In the step S20, the feed rollers 16 and the whole-surface belt 17 are rotated normally to feed the first and second originals $S_1'$, $S_2'$ toward the platen 11.

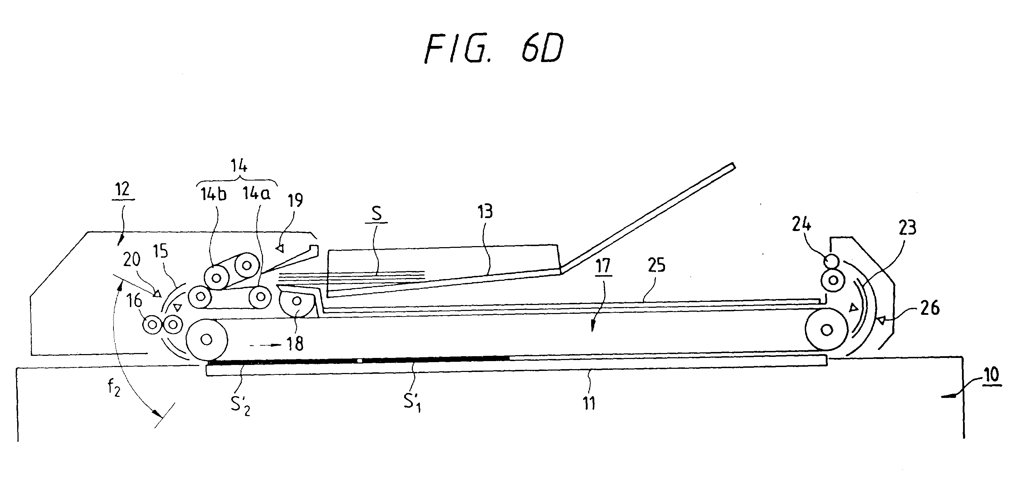

Then, in a step S21, it is judged whether the trailing end of the second original $S_2'$ is advanced by a predetermined amount $f_2$ after it has passed through the sensor 20, that is to say, it is judged whether the trailing end of the second original $S_2'$ is advanced until it reaches the platen 11 as shown in Fig. 6D. If advanced (YES), the sequence goes to a step S22, where the feed rollers (convey rollers) 16 and the whole-surface belt 17 are stopped.

Now, the first and second originals $S_1'$ and $S_2'$ are moved at a speed same as the rotating speed of the feed rollers 16 while these originals are being pinched by the nip between the feed rollers; whereas, after the original has left the feed rollers, the original is moved at a speed same as the moving speed of the whole-surface belt 17 (faster than the speed of the feed rollers 16 by about 3%).

Accordingly, the first original $S_1'$ is moved together with the second original $S_2'$ by a distance corresponding to the overlapped amount $(\ell_1 - f_1)$, and thereafter, the first original $S_1'$ is moved at the speed faster than that of the second original $S_2'$ by means of the whole-surface belt 17, with the result that, during the originals are being fed to the platen 11 the overlapped amount is gradually reduced, and when the trailing end of second original reaches the platen 11, the first and second originals $S_1'$ and $S_2'$ are rested side by side on the platen 11 without substantially no clearance therebetween.

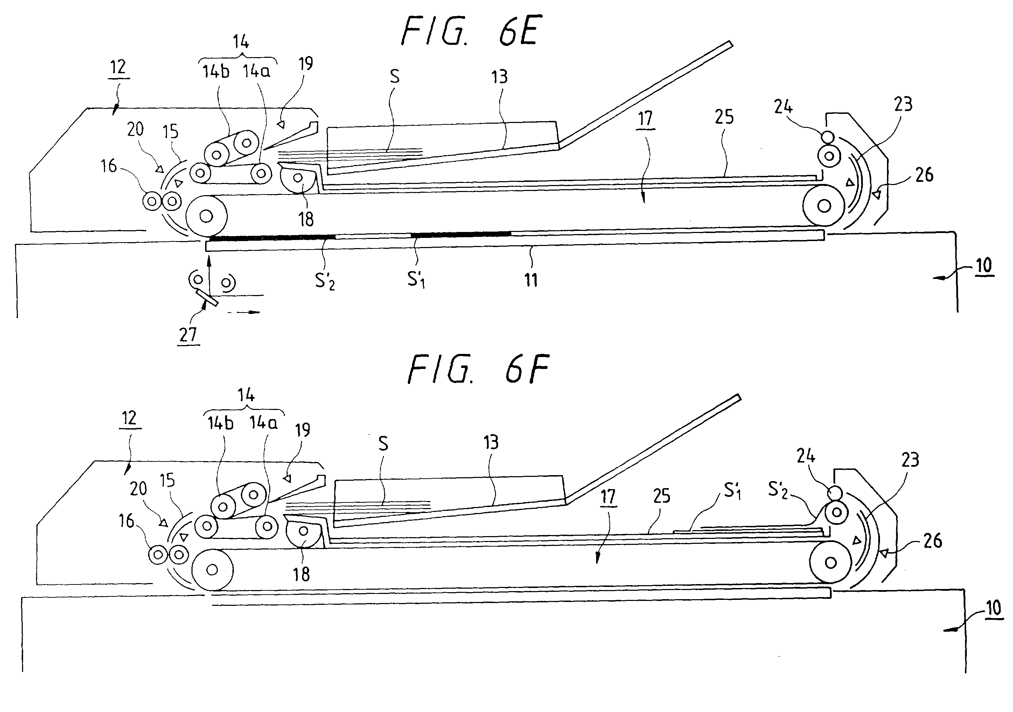

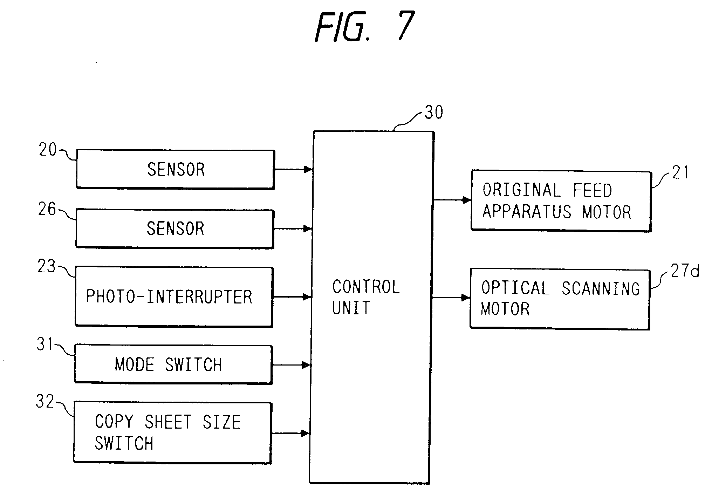

Then, in a step S23, the image information of the first original $S_1'$ and the image information of the second original $S_2'$ are read, and the read images are printed out on one surface of the copy sheet of A3 size (Fig. 6E). After the reading is finished, in a step S24, the whole-surface belt 17 and the ejector rollers 24 are rotated normally to discharge the first and second originals $S_1'$, $S_2'$ from the platen 11 onto the discharge tray 25 (Fig. 6F).

Then, in a step S25, it is judged whether any originals remain on the stacking tray 13; if remain (YES), the sequence returns to the step S13, and the same cycles are repeated until there is no original S' on the stacking tray.

In this way, the images of two originals S' of A4 size can be printed on one surface of the copy sheet of A3 size without the lack or disappearance of the images, as shown in Fig. 9.

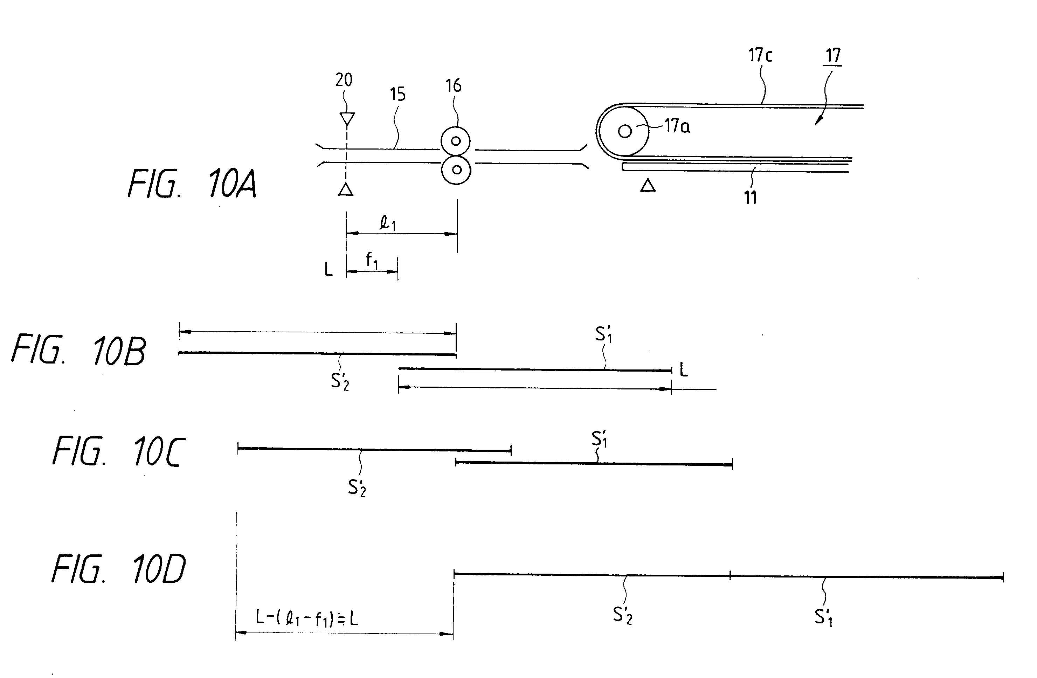

Next, a process wherein the overlapped amount between the first and second originals are reduced to substantially zero during the feeding of the originals will be fully explained with reference to Fig. 10A to 10D.

Fig. 10A is an explanatory view illustrating the positional relationship between the sensor 20, feed rollers 16 and whole-surface belt 17 in a development fashion, and Figs. 10B to 10D are explanatory views for explaining the feeding process of the originals S'.

As mentioned above, the moving speed of the whole-surface belt 17 is selected to be faster than the rotating speed of the feed rollers 16 by about 3%. Further, an original pinching and feeding force provided by the nip between the feed rollers 16 (feeding force of the feed rollers 16) is selected to be stronger than an original feeding force provided between the whole-surface belt 17 and the platen 11 (feeding force of the whole-surface belt 17), so that the original S' can be moved at a speed same as the rotating speed of the feed rollers 16 so long as the original is nipped between the feed rollers.

As shown in Fig. 10B, considering a condition that the trailing end of the first original $S_1'$ and the leading end of the second original $S_2'$ are overlapped with each other, when the feed rollers 16 and the whole-surface belt 17 are rotated normally in this condition, the first original $S_1'$ is moved at the speed same as the rotating speed of the feed rollers 16 until this original has been advanced by the overlapped amount and leaves the feed rollers 16, (Fig. 10C), even if the leading end of this original is engaged by the whole-surface belt 17. After the first original $S_1'$ has left the feed rollers 16, it is moved at the speed same as the moving speed of the whole-surface belt 17. In this point, since the second original $S_2'$ are still pinched by the feed rollers 16, this second original $S_2'$ is moved at the speed same as the rotating speed of the feed rollers 16. That is to say, the first original $S_1'$ is moved at the speed same as the moving speed of the whole-surface belt 17, whereas the second original $S_2'$ is moved at the speed same as the feed rollers 16, thus feeding two originals at different speeds. This condition continues until the second original $S_2'$ leaves the feed rollers 16.

A distance that the first and second originals $S_1'$ and $S_2'$ are moved during the above feeding process will have a value which is obtained by subtracting the overlapped amount ($\ell_1 - f_1$) from the length (L) of the original, i.e., $\{L - (\ell_1 - f_1)\}$ (see Fig. 10D).

Incidentally, since the overlapped amount ($\ell_1 - f_1$) is very small in comparison with the length L of the original S', the distance that the second original $S_2'$ is moved can be closely resembled to L. In this case, the first original $S_1'$ is moved longer than the advancing distance of the second original by 3%, i.e., L x 0.03.

Accordingly, by selecting the overlapped amount to have a value of L x 0.03, it is possible to rest the first and second originals $S_1'$ and $S_2'$ side by side on the platen 11 without no clearance therebetween.

Now, since L represents the length of the original, it should be understood that the setting value for the overlapped amount can be determined by the length of the original S'.

For example, in the case of the original having A4 size, the overlapped amount becomes:

$$210 \text{ mm x } 0.03 = 6.3 \text{ mm.}$$

In the case of the original having B5 size, the overlapped amount becomes:

$$182 \text{ mm x } 0.03 = 5.46 \text{ mm.}$$

Further, in the case of the original having LTR size, the overlapped amount becomes:

$$216 \text{ mm x } 0.03 = 6.48 \text{ mm.}$$

Next, the relationship between the original size and the overlapped amount will be fully described.

The length L of the original is detected by counting the number of slits of the clock plate 22 by means of the photo-interrupter 23, from when the feed rollers 16 and the whole-surface belt 17 start to be driven in the step S15 to when the trailing end of the first original $S_1'$ leaves the sensor 20 in the step S16.

When the length L of the original is detected, as mentioned above, since the overlapped amount (L x 0.03) can be calculated, the first original $S_1'$ may be stopped in a condition that the trailing end of this original protrudes from the nip between the feed rollers 16 by the amount (L x 0.03). To this end, the first original may be fed by a predetermined amount $f_1$ (a distance calculated by subtracting the overlapped amount (L x 0.03)

from the distance $\ell_1$ (between the sensor 20 and the nip of the feed rollers 16) after it has left the sensor 20.

The predetermined amount can be expressed by the following equation:

$$f_1 = \ell_1 - (L \times 0.03).$$

Here, since $\ell_1$ is a constant value determined by the original feeding apparatus 12, the amount $f_1$ varies only in accordance with the size of the original S'.

For example, if the distance $\ell_1$ between the sensor 20 and the nip of the feed rollers 16 is 12 mm, in the case of the original having A4 size, the predetermined amount $f_1$ will be:

$$f_1 = 12 - (210 \times 0.03) = 5.7 \text{ mm}.$$

And, accordingly, the first original $S_1'$ may be fed by 5.7 mm after the trailing end of this original has left the sensor 20, and be stopped at that point.

On the other hand, in the case of the original having B5 size, the predetermined amout $f_1$ becomes:

$$f_1 = 12 - (182 \times 0.03) = 6.54 \text{ mm},$$

and in the case of the original having LTR size, the predetermined amout $f_1$ becomes:

$$f_1 = 12 - (216 \times 0.03) = 5.52 \text{ mm}.$$

By changing the amount $f_1$ in accordance with the size of the original S' in the path between the sensor 20 and the feed rollers 16, it is possible to vary the overlapped amount (i.e., it is possible to vary the overlapped amount in accordance with the size of the original). As a result, it is possible to prevent the lack of the image information on the recording sheet even when the sizes of the originals are changed.

In the illustrated embodiment, while the original feeding apparatus 12 included the separate stacking tray and sheet discharge tray 25, the present invention may be adopted to an apparatus of the type wherein the original S' fed to the platen is returned to the stacking tray 13 again.

Further, an example that two originals S' are simultaneously fed to the platen 11 and the images of the originals are printed on the recording sheet was explained, three, four or more originals S' may be fed simultaneously to the platen 11 and the images of these originals may be printed on the recording sheet.

Further, while an example that the images of a plurality of originals S' are printed on the front surface of the recording medium was explained, the present invention may be applied to the both-surface printing wherein the recording medium is turned over in the copying machine and the images of a plurality of originals are also printed on the back surface of the recording medium.

## Claims

1. A sheet feeding apparatus for feeding originals, having

   first rotary means (14, 18) for supplying originals one by one (S');
   second rotary means (16) for feeding said originals (5) from said first rotary means (14, 18); and
   first control means (20, 21, 22, 23) for rotating said second rotary means (16),

   **characterized in that**

   said first control means (20, 21, 22, 23) are means for rotating said second rotary means (16) for a predetermined time, for stopping a first original ($S_1'$) with a trailing end of said first original ($S_1'$) protruding from said second rotary means toward an upstream side, said first control means are means for controlling so that a second original ($S_2'$) is fed to said second rotary means (16) by said first rotary means (14, 18) to cause a leading end of said second original ($S_2'$) to thereby overlap with said trailing end of said first original, and thereafter said first and second originals ($S_1'$, $S_2'$) are fed simultaneously, wherein said first original ($S_1'$) is fed faster than said second original ($S_2'$) to cancel the overlap between both originals when they reach a processing position.

2. A sheet feeding apparatus according to claim 1, said means for cancelling the overlap of sheets including

   third rotary means (17) disposed downstream of said second rotary means (16) to feed said original (S'); and
   second control means (30) for controlling original feed speed of said third rotary means (17) faster than that of said second rotary means (16) to cancel said overlap between said first original ($S_1'$) and said second original ($S_2'$).

3. A sheet feeding apparatus according to claim 2, **characterized in that** said third rotary means (17) comprises a convey belt (17c) for introducing said original (S') to a platen glass (11), said first and second originals ($S_1'$, $S_2'$) are positioned on said platen glass side by side by said conveying belt (17c) with leaving a small gap (Y) therebetween.

**4.** A sheet feeding apparatus according to claim 3, **characterized in that** said second original ($S'_2$) is pushed into said second rotary means (16) while said first original ($S'_1$) is nipped by said second rotary means and held in stopped condition.

## Patentansprüche

**1.** Ein Blattzuführgerät zum Zuführen von Originalen, das

eine erste Drehvorrichtung (14, 18) zum nacheinander Zuführen von Originalen (S') hat;

eine zweite Drehvorrichtung (16) zum Zuführen der Originale (S) von der ersten Drehvorrichtung (14, 18); und

eine erste Steuerungsvorrichtung (20, 21, 22, 23) zum Drehen der zweiten Drehvorrichtung (16),

dadurch gekennzeichnet, daß

die erste Steuerungsvorrichtung (20, 21, 22, 23) eine Vorrichtung zum Drehen der zweiten Drehvorrichtung (16) für eine vorbestimmte Zeit ist, zum Stoppen eines ersten Originals ($S'_1$), wenn ein nachlaufendes Ende des ersten Originals ($S'_1$) von der zweiten Drehvorrichtung in Richtung einer stromaufwärtigen Seite vorsteht,

wobei die erste Steuerungsvorrichtung Vorrichtungen zum Steuern sind, so daß ein zweites Original ($S'_2$) durch die erste Drehvorrichtung (14, 18) der zweiten Drehvorrichtung (16) zugeführt wird, um zu bewirken, daß dadurch ein Führungsende des zweiten Originals ($S'_2$) mit dem nachlaufenden Ende des ersten Originals überlappt, und daß danach das erste und das zweite Original ($S'_1$, $S'_2$) gleichzeitig zugeführt werden, wobei das erste Original ($S'_1$) schneller zugeführt wird als das zweite Original ($S'_2$), um das Überlappen zwischen beiden Originalen zu beseitigen, wenn sie eine Verarbeitungsposition erreichen.

**2.** Ein Blattzuführgerät gemäß Anspruch 1, wobei die Vorrichtung zur Beseitigung des Überlappens der Blätter

eine dritte Drehvorrichtung (17) enthält, die stromabwärts von der zweiten Drehvorrichtung (16) angeordnet ist, um das Original (S') zuzuführen; und

eine zweite Steuerungsvorrichtung (30) zur Steuerung einer schnelleren Original-Zuführgeschwindigkeit der dritten Drehvorrichtung (17) als jene der zweiten Drehvorrichtung (16) enthält, um das Überlappen zwischen dem ersten Original ($S'_1$) und dem zweiten Original ($S'_2$) zu beseitigen.

**3.** Ein Blattzuführgerät gemäß Anspruch 2, dadurch gekennzeichnet, daß die dritte Drehvorrichtung (17) einen Transportriemen (17c) zur Einführung des Originals (S') zu einer Glasplatte (1l) aufweist, wobei die ersten und zweiten Originale ($S'_1$, $S'_2$) durch den Transportriemen (17c) auf der Glasplatte nebeneinander positioniert werden, wobei ein kleiner Spalt (Y) dazwischen gelassen wird.

**4.** Ein Blattzuführgerät gemäß Anspruch 3, dadurch gekennzeichnet, daß das Original ($S'_2$) in die zweite Drehvorrichtung (16) geschoben wird, während das erste Original ($S'_1$) von der zweiten Drehvorrichtung eingeklemmt und in einem gestoppten Zustand gehalten wird.

## Revendications

**1.** Appareil d'alimentation en feuilles pour l'alimentation en originaux, comprenant

un premier moyen rotatif (14, 18) pour délivrer des originaux un par un (S');
un second moyen rotatif (16) pour faire avancer lesdits originaux (S') à partir dudit premier moyen rotatif (14, 18); et
des premiers moyens de commande (20, 21, 22, 23) pour faire tourner ledit second moyen rotatif (16),

caractérisé en ce que

lesdits premiers moyens de commande (20, 21, 22, 23) sont des moyens pour faire tourner ledit second moyen rotatif (16) pendant une durée prédéterminée, pour arrêter un premier original ($S'_1$), l'extrémité arrière dudit premier original ($S'_1$) faisant saillie dudit second moyen rotatif vers le côté amont,
lesdits premiers moyens de commande sont des moyens pour effectuer une commande de telle sorte qu'un second original ($S_2$) est amené audit second moyen rotatif (16) par ledit premier moyen rotatif (14, 18) pour que l'extrémité avant dudit second original ($S'_2$) vienne ainsi chevaucher ladite extrémité arrière dudit premier original, puis lesdits premier et second originaux ($S'_1$, $S'_2$) sont avancés simultanément, ledit premier original ($S'1$) étant avancé plus rapidement que ledit second original (S'2) pour supprimer le chevauchement entre les deux originaux, lorsqu'ils atteignent une position de traitement.

2. Appareil d'alimentation en feuilles selon la revendication 1, ledit moyen pour supprimer le chevauchement de feuilles comportant

un troisième moyen rotatif (17) disposé en aval dudit second moyen rotatif (16) pour faire avancer ledit original (S') ; et
un second moyen de commande (30) pour commander la vitesse d'avance d'originaux dudit troisième moyen rotatif (17) plus rapidement que celle dudit second moyen rotatif (16) en vue de supprimer ledit chevauchement entre ledit premier original (S'$_1$) et ledit second original (S'$_2$).

3. Appareil d'alimentation en feuilles selon la revendication 2, caractérisé en ce que ledit troisième moyen rotatif (17) comprend une courroie transporteuse (17c) pour amener ledit original (S') sur une plaque de verre (11), lesdits premier et second originaux (S'$_1$, S'$_2$) étant positionnés sur ladite plaque de verre, côte à côte, par ladite courroie transporteuse (17c), en laissant entre eux un petit intervalle (Y).

4. Appareil d'alimentation en feuilles selon la revendication 3, caractérisé en ce que ledit second original (S'$_2$) est poussé dans ledit second moyen rotatif (16) tandis que ledit premier original (S'$_1$) est pincé par ledit second moyen rotatif et maintenu dans un état arrêté.

# FIG. 1A
# PRIOR ART

# FIG. 1B

# FIG. 1C

# FIG. 1D

# FIG. 1E

# FIG. 1F

## FIG. 1G

## FIG. 1H

# FIG. 2
# PRIOR ART

$S'_2$

203   203

X

$S'_1$

# FIG. 3
# PRIOR ART

$\ell_1$   $\ell_2$   $\ell_1$

No. 2   No.

$S'$

$S'$

$\ell_2$

No. 2   No.

# FIG. 4

EP 0 570 017 B1

FIG. 5

EP 0 570 017 B1

FIG. 6A

# FIG. 6B

# FIG. 6C

# FIG. 6D

EP 0 570 017 B1

## FIG. 6E

## FIG. 6F

EP 0 570 017 B1

# FIG. 7

```
20 ── [ SENSOR ] ──→
26 ── [ SENSOR ] ──→
23 ── [ PHOTO-INTERRUPTER ] ──→      30
31 ── [ MODE SWITCH ] ──→        [ CONTROL UNIT ] ──→ [ ORIGINAL FEED APPARATUS MOTOR ] 21
32 ── [ COPY SHEET SIZE SWITCH ] ──→              ──→ [ OPTICAL SCANNING MOTOR ] 27d
```

*FIG. 8A*

```
                    ┌─────────┐
                    │  START  │
                    └────┬────┘
                         ↓
         ┌───────────────────────────────┐  ⌐S10
         │        SET ORIGINAL           │
         └───────────────┬───────────────┘
                         ↓
         ┌───────────────────────────────┐  ⌐S11
         │        SET COPY MODE          │
         └───────────────┬───────────────┘
                         ↓
                    ◇────────────────◇        NO
                  <  COPY START BUTTON ON ? >──────┐
                    ◇────────────────◇             │
                         │ S12                     │
                         ↓ YES                     │
      ③──────────────────→                         │
         ┌───────────────────────────────┐  ⌐S13   │
         │ ROTATE SEPARATE PORTION 14,   │         │
         │ SHEET SUPPLY ROLLER 18        │         │
         └───────────────┬───────────────┘         │
                         ↓                         │
                    ◇────────────────◇        NO   │
                  <  FIRST ORIGINAL ABUTTED >──────┤
                  <  AGAINST ROLLER 16 ?     >     │
                    ◇────────────────◇             │
                         │ S14                     │
                         ↓ YES                     │
         ┌───────────────────────────────┐         │
         │ ROTATE CONVEY ROLLER 16 AND   │         │
         │ WHOLE-SURFACE BELT 17 NORMALLY│         │
         └───────────────┬───────────────┘         │
                         ↓  S15                     │
                    ◇────────────────◇        NO   │
                  <  REAR END OF FIRST      >──────┘
                  <  ORIGINAL ADVANCED BY   >
                  <  PREDETERMINED AMOUNT f1 >
                  <  AFTER PASSED BY         >
                  <  SENSOR 20 ?             >
                    ◇────────────────◇
                         │ S16
                         ↓ YES
         ┌───────────────────────────────┐  ⌐S17
         │ STOP CONVEY ROLLER 16 AND     │
         │ WHOLE-SURFACE BELT 17 FOR     │
         │ A WHILE                       │
         └───────────────────────────────┘
```

ROTATE SEPARATE PORTION 14 AND SHEET SUPPLY ROLLER 18    S18

SECOND ORIGINAL ABUTTED AGAINST ROLLER 16 ?    NO    S19

② ──→ YES

S20 — ROTATE CONVEY ROLLER 16, WHOLE-SURFACE BELT 17 NORMALLY

①

*FIG. 8B* ①

↓

S21
REAR END
OF SECOND ORIGINAL
ADVANCED BY PREDETERMINED
AMOUNT $f_2$ AFTER PASSED
BY SENSOR 20 ? —— NO —→ ②

YES

S22
STOP CONVEY ROLLER 16,
WHOLE-SURFACE BELT 17 FOR
A WHILE

S23
READ ORIGINAL

S24
DISCHARGE ORIGINAL ONTO
SHEET DISCHARGE TRAY

③ ←— YES —— ORIGINAL EXISTED ?
S25

NO

END

*FIG. 9*

| NO. 2 | NO. 1 | S' |
|-------|-------|----|

| NO. 2 | NO. 1 |
|-------|-------|

FIG. 10A

FIG. 10B

FIG. 10C

FIG. 10D